## Europäisches Patentamt

## European Patent Office

## Office européen des brevets

(11) Veröffentlichungsnummer: **0 059 464**
**B1**

(12) # EUROPÄISCHE PATENTSCHRIFT

(45) Veröffentlichungstag der Patentschrift:
**29.04.87**

(51) Int. Cl.⁴: **F 24 J 2/14,** G 02 B 5/10

(21) Anmeldenummer: **82101536.9**

(22) Anmeldetag: **27.02.82**

(54) Solarkonzentrator.

(30) Priorität: **02.03.81 DE 3107888**

(43) Veröffentlichungstag der Anmeldung:
**08.09.82 Patentblatt 82/36**

(45) Bekanntmachung des Hinweises auf die Patenterteilung:
**29.04.87 Patentblatt 87/18**

(84) Benannte Vertragsstaaten:
**AT BE CH DE FR GB IT LI LU NL SE**

(56) Entgegenhaltungen:
**AU-B-509 473**
**DE-A-2 726 531**
**DE-A-2 827 007**
**DE-A-2 853 603**
**DE-C-113 193**
**DE-C-1 144 664**
**FR-A-2 446 447**

**FORSCHUNG AKTUELL, "Sonnenenergie" 1976,**
**UMSCHAU-VERLAG, Frankfurt/M. Seiten 256 bis**
**264, Abschnitt B. Mitteltemperaturanlagen**

(73) Patentinhaber: **Volksbank Remscheid eG, Tenter Weg 1-3, D-5630 Remscheid- Lennep (DE)**

(72) Erfinder: **Melchior, Bernd, Burger Strasse 255, D-5630 Remscheid (DE)**

(74) Vertreter: **Patentanwaltsbüro Cohausz & Florack, Postfach 14 01 47, D-4000 Düsseldorf 1 (DE)**

## Beschreibung

Die Erfindung betrifft einen Solarkonzentrator mit einem Hohlspiegel, der die Sonnenbestrahlung auf eine zwischen dem Spiegel und der Sonne befindliche Sonnenzelle konzentriert, wobei der Hohlspiegel aus einem Block (15) durchsichtigen Materials besteht, der zur Bildung der Spiegelfläche eine konvex gebogene und verspiegelte Unterseite aufweist.

Es sind runde und zylindrische Parabolhohlspiegel als Solarkonzentratoren bekannt, die die einfallende Sonnenstrahlung auf eine Absorberfläche konzentrieren, von der die entstehende Wärme abgeführt wird, siehe Matthöfer, "Sonnenenergie", Umschau-Verlag, Frankfurt/M., 1976, Seite 256 ff. Derartige Vorrichtungen sind vielteilig, unhandlich, bauen sehr groß und sind in der Herstellung aufwendig. Die Spiegeloberfläche verschmutzt sehr schnell, läßt sich schwer reinigen und wird durch die häufige Reinigung verkratzt. Eine Massenherstellung läßt sich nicht verwirklichen.

Aufgabe der Erfindung ist es, einen Solarkonzentrator zu schaffen, dessen Spiegelfläche nicht verschmutzt und dessen Äußeres sich leicht reinigen läßt.

Ferner ist es Aufgabe der Erfindung, einen konstruktiv einfach und Preiswert herstellbaren Solarkonzentrator zu schaffen, der insbesondere in Richtung der Hauptsonneneinstrahlung eine kompakte Bauweise aufweist. Auch ist es Aufgabe der Erfindung, einen Solarkonzentrator zu schaffen, der sich platzsparend aneinanderreihen läßt und die Sonnenstrahlung pro Flächeneinheit optimal nutzt.

Diese Aufgaben werden erfindungsgemäß dadurch gelöst, daß der Block (15) auf seiner der Unterseite (2) gegenüberliegenden Seite mit einer ebenen Oberseite (3) versehen ist, auf der die Sonnenzelle angeordnet oder in die die Sonnenzelle eingelassen ist.

Hierdurch sind alle optisch aktiven Flächen des Solarkonzentrators geschützt angeordnet, d.h. sowohl die Spiegeloberfläche als auch die Absorberfläche werden vom durchsichtigen Material geschützt, so daß sie nicht verschmutzen und ihre optische Qualität nicht verändern können. Es braucht nur noch die glatte Oberseite des Blocks gereinigt zu werden.

Der Solarkonzentrator ist eine kompakte Einheit, deren Teile zueinander nicht bewegt werden können, so daß die optimalen Abstände und die exakte Einstellung ständig erhalten bleibt. Auch läßt sich der Konzentrator leicht mit anderen aneinanderreihen, so daß große Flächen ohne größere unbenutzte Zwischenräume entstehen können.

Eine optimale Konzentrierung der einfallenden Strahlung wird dadurch erreicht, daß die Unterseite zumindest in einem Schnitt parabelförmig ist. Soll eine Konzentrierung nicht nur längs einer Linie, sondern punktförmig erreicht werden, so muß die Unterseite parabolförmig sein. Eine Erweiterung des Brennpunktes auf die Größe der verwendeten Absorberfläche wird dadurch erreicht, daß die Unterseite im mittleren Bereich im Schnitt parabelförmig oder etwa parabolförmig ist und die äußeren Bereiche derart erweiternd gekrümmt sind, daß der Brennpunkt erweitert bzw. vergrößert ist.

Eine besonders einfache Handhabung und leichte Reinigung wird dadurch erreicht, daß die Oberseite des Blocks rechtwinklig zur Haupteinstrahlungsrichtung angeordnet ist. Hierzu wird auch vorgeschlagen, daß die Oberseite des Blocks rechtwinklig zur Parabelachse angeordnet ist.

Vorzugsweise wird vorgeschlagen, daß zumindest ein Querschnitt des Blocks ein Parabelsegment ist. Eine Erweiterung des Brennpunkts wird dadurch erreicht, daß das Parabelsegment zumindest in beiden äußeren Bereichen eine etwas geringere Krümmung als die exakte Parabelform aufweist. Eine hohe optische Qualität wird dadurch erreicht, daß die Rückseite zur Bildung der spiegelnden Schicht mit Silber bedampft ist.

Um die optische Qualität der Oberseite zu erhalten, die durch äußere Einflüsse, insbesondere durch Reinigung sich verschlechtern kann, wird vorgeschlagen, daß die Oberseite mit einem kratzfesten, durchsichtigen dünnen Material beschichtet ist.

Vorzugsweise wird vorgeschlagen, daß die Sonnenzelle von einem Halbleiterphotoelement oder einem dunklen Wärmeleitelement gebildet ist.

Eine Aneinanderreihung der Solarkonzentratoren ohne Restflächen ist dadurch erreichbar, daß die Ränder der flachen Oberseite und damit die Seitenränder des Blocks ein Rechteck, Quadrat, Fünfeck oder Sechseck bilden. Hierdurch wird zusätzlich erreicht, daß die weniger effizienten Spiegelflächen reduziert werden.

Ein hoher Wirkungsgrad des Solarkonzentrators wird dadurch erreicht, daß die etwa parabolförmige Spiegelfläche von der Parabolform so weit abweicht, daß die Strahlen in einem zur Spiegelfläche näher gelegenen Abstand um Brennpunkt im Querschnitt eine insbesondere rechteckige Flächenform aufweisen, und daß in diesem Abstand eine Absorberfläche angeordnet ist.

Ein sehr geringer Anteil an weniger wirksamen Spiegelflächen und damit ein hoher Wirkungsgrad wird dadurch erreicht, daß die flache Oberseite in etwa rechteckförmig ist und an zwei Längsrändern rechtwinklig Seitenflächen des Blocks angrenzen, die parabelsegmentförüig sind. Dabei können mehrere Blöcke mit ihren Seitenflächen aneinanderliegen.

Eine Befestigung der Blöcke aneinander ist dadurch erreichbar, daß zur Abführung der Wärme ein insbesondere rechteckförmiges Rohr angeordnet ist, das an der Oberseite der Absorberfläche befestigt und das auf der Oberzeite des Blocks angeordnet oder in den Block eingelassen ist. Dabei kann zwischen der Absorberfläche und dem Rohr ein wärmeleitendes Profil angeordnet sein, das an der Absorberfläche befestigt ist und das das Rohr hält. Hierdurch können die Blöcke klemmend am Rohr gehalten werden, so daß diese leicht montierbar und auswechselbar sind.

Eine besonders vorteilhafte Ausgestaltung, die die kompakte Bauweise besonders nutzt, wird dadurch geschaffen, daß die der Sonne zugewandte Seite des Spiegels von durchsichtigem Material in einem Abstand zum Spiegel oder direkt anliegend am Spiegel bedeckt ist. Hierdurch können nicht nur Wärmeverluste an der Absorberfläche auf einfache Weise vermieden werden, sondern der Spiegel wird auch völlig verschmutzungsfrei, so daß sich eine regelmäßige Reinigung und Wartung des Spiegels erübrigt. Auch werden hierdurch Beschädigungen des Spiegels ausgeschlossen.

Dabei kann das durchsichtige Material den Hohlspiegel völlig ausfüllen, wodurch sich zu den obengenannten Vorteilen die Herstellung weiter vereinfacht und die Beschädigungsgefahr weiter verringert wird.

Das durchsichtige Material des Blocks kann Glas oder Kunststoff und insbesondere Acrylglas sein. Auf oder in der Oberseite des durchsichtigen Materials kann die Absorberfläche bzw. die Sonnenzelle angeordnet sein, wodurch sich zusätzliche Halterungen erübrigen und sich Herstellung und Montage verein fachen. Insbesondere kann die Absorberfläche in die Oberseite des durchsichtigen Materials eingelassen sein.

Vorzugsweise wird vorgeschlagen, daß zwischen der Absorberfläche und dem durchsichtigen Material des Blocks ein zweites durchsichtiges Material angeordnet ist, dessen Brechungsindex so gewählt ist, daß die Strahlen zur Absorberfläche hin gebrochen werden. Hierdurch kann die Bauhöhe des Konzentrators weiter verringert werden, und in einem sehr schrägen Winkel einfallende Strahlen erreichen immer noch die Absorberfläche. Dabei kann das zweite durchsichtige Material ein haltendes Mittel für die Absorberfläche, insbesondere ein Klebstoff sein, so daß dieses Material eine zweifache Funktion ausübt.

Ein Verfahren für eine einfache und Preiswerte Herstellung hoher Präzision, insbesondere Massenherstellung wird dadurch erreicht, daß zur Bildung des Blocks das durchsichtige Material in eine Form gegossen, gepreßt oder gespritzt wird.

Ferner kann die Verspiegelung der Unterseite nach dem Entformen des Formlings werden.

Vorzugsweise wird vorgeschlagen, daß die Rückseite nach der Verspiegelung mit einer schützenden Schicht, insbesondere einem Lack versehen wird.

Ausführungsbeispiele der Erfindung sind in den Zeichnungen schematisch dargestellt und werden im folgenden näher beschrieben. Es zeigen:

Fig. 1 eine isometrische Ansicht zweier Blöcke mit paraboloidförmigen Unterseiten;

Fig. 2 eine isometrische Ansicht von Blöcken mit teilzylindrischen Unterseiten;

Der Solarkonzentrator (Sonnenkollektor) besteht aus einem Block 15 aus durchsichtigem Material, wie Glas oder klarem Kunststoff, insbesondere Acrylglas, und weist eine konvex gekrümmte Unterseite 2 und eine flache ebene Oberseite 3 auf. Die in etwa rechteckförmige Oberseite 3 steht im Gebrauch rechtwinklig zur Haupteinstrahlungsrichtung, so daß die Strahlen von der Oberfläche möglichst wenig reflektiert werden. Die Oberseite 3 ist mit einer kratzfesten dünnen Schicht versehen.

Die Unterseite ist zumindest in einem zur Oberseite 3 rechtwinkligen Schnitt Parabelförmig. Darüber hinaus kann die Unterseite 2 zweifach gekrümmt sein, so daß sie einen Teil eines Paraboloids bildet. Der Block kann von einem Segment bzw. einer Kuppel eines Paraboloids gebildet sein oder aber eine Scheibe aus einer Paraboloidkuppel (-Segment) sein, deren zueinander parallele Seitenflächen parallel zur Paraboloidachse liegen und den gleichen Abstand zu dieser Achse haben. Dabei steht die Fläche der Oberseite 3 rechtwinklig zur Paraboloidachse 16. Da die Dicke der Scheibe erheblich geringer ist als die Länge der Oberseite 3, können diese Scheibensegmente derart nebeneinander aneinandergereiht werden, daß die Seitenflächen 17. der Blöcke 15 aneinander liegen und zur Deckung gelangen.

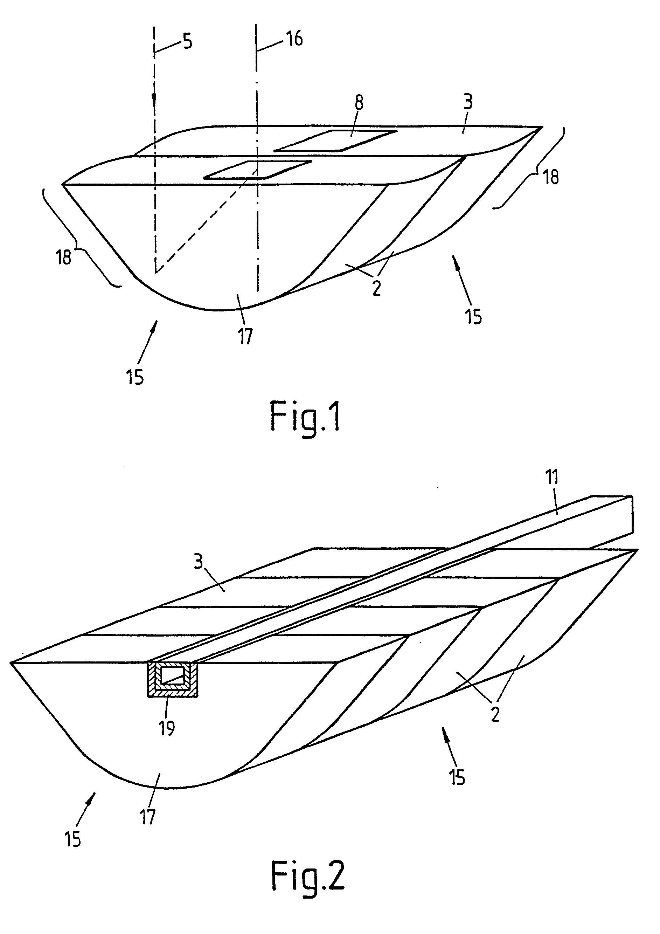

Die Unterseite 2 ist durch Aufdampfen.von Silber verspiegelt und bildet damit einen mit durchsichtigem Material gefüllten Hohlspiegel, der die einfallenden Sonnenstrahlen innerhalb des Materials des Blocks zur Absorberfläche 8 hin reflektiert. Die Absorberfläche wird von einer Sonnenzelle (Halbleiterphotoelement) oder einem geschwärzten Wärmeleitelement gebildet. Die Absorberfläche 8 liegt mittig auf der Achse 16 und rechtwinklig zu dieser, aber nicht genau im Brennpunkt des Hohlspiegels, sondern gegenüber dem Brennpunkt in Richtung der Achse 16 zum Spiegel hin versetzt, damit die Strahlen die Absorberfläche 8 nicht Punktförmig, sondern in einer Fläche treffen. Damit diese durch die Strahlen gebildete Fläche der Absorberfläche 8 entspricht, werden bei einem scheibenförmigen Block entsprechend den Figuren 1 oder 2 die äußeren Bereiche 18, die von der Achse 16 weiter entfernt liegen, mit einem geringeren Krümmungsradius versehen als der exakte Parabelverlauf, so daß die Fläche, auf der die Strahlen auftreffen, in Längsrichtung der Oberseite 3 gestreckt wird und damit die Form der etwa quadratischen Absorberfläche 8 erhält. Durch eine solche Aufweitung der Parabelform kann es sich auch erübrigen, die Absorberfläche außerhalb des Brennpunktes zu legen.

Der Block 15 braucht nicht unbedingt nur eine zur Paraboloidachse parallele Scheibe zu sein, sondern kann auch ein guadratischer, regelmäßig fünfeckiger oder regelmäßig sechseckiger Ausschnitt aus einem Paraboloid oder ein länglicher Halbzylinder sein, wobei dann die Oberseite 3 quadratisch, fünfeckig oder sechseckig ist und die Seitenflächen 17 sich rechtwinklig an die Seiten der Oberseite anschließen. Die Paraboloidachse 16 liegt dabei immer mittig im Block und rechtwinklig zur Oberseite. In dieser Art geformte Blöcke lassen sich zur Bildung größerer Flächen aneinandersetzen, ohne unbenutzte Zwischenräume zu bilden.

Das in Fig. 2 gezeigte Ausführungsbeispiel unterscheidet sich von dem nach Fig. 1 u.a. dadurch, daß ein wärmeleitendes U-Profil 19 in die Oberseite 3 derart eingelassen ist, daß die Öffnung oben liegt und das Profil rechtwinklig zu den Seitenflächen 17 angeordnet ist. Die Außenseiten des U-Profils bilden die Absorberflächen. In das U-Profil wird von oben ein Rohr 11 eingeklemmt, das von einer Wärme abführenden Flüssigkeit durchströmt wird.

Die scheibenförmigen Blöcke 15 nach Fig. 2 sind auf ihrer Unterseite nicht zweifach, sondern nur einfach gekrümmt, und damit Teil einer im Querschnitt parabelförmigen Scheiben. Diese Form bietet sich dann an, wenn die Absorberfläche sich über die gesamte Dicke der Scheibe erstreckt.

Acrylglas wird in eine runde, rechteckige oder teilzylindrische Hohlform gegossen, deren nach unten ausgewölbter Boden parabolförmig gewölbt ist, so daß nach dem Entformen die Rückseite des Formlings eine Parabolförmige Wölbung aufweist. Die Unterseite des Formlings wird verspiegelt, so daß durch die Oberseite einfallende Strahlen innerhalb der Acrylglasscheibe reflektiert werden.

**Patentansprüche**

1. Solarkonzentrator mit einem Hohlspiegel, der die Sonnenbestrahlung auf eine zwischen dem Spiegel und der Sonne befindliche Sonnenzelle konzentriert, wobei der Hohlspiegel aus einem Block (15) durchsichtigen Materials besteht, der zur Bildung der Spiegelfläche eine konvex gebogene und verspiegelte Unterseite aufweist, dadurch gekennzeichnet, daß der Block (15) auf seiner der Unterseite (2) gegenüberliegenden Seite mit einer ebenen Oberseite (3) versehen ist, auf der die Sonnenzelle angeordnet oder in die die Sonnenzelle eingelassen ist.

2. Solarkonzentrator nach Anspruch 1, dadurch gekennzeichnet, daß die Unterseite (2) zumindest in einem Schnitt parabelförmig ist.

3. Solarkonzentrator nach Anspruch 1 oder 2, dadurch gekennzeichnet, daß die Unterseite (2) parabolformig ist.

4. Solarkonzentrator nach Anspruch 1 oder 2, dadurch gekennzeichnet, daß die Unterseite (2) im mittleren Bereich im Schnitt parabelförmig oder etwa parabolförmig ist und die äußeren Bereiche (18) derart erweiternd gekrümmt sind, daß der Brennpunkt erweitert bzw. vergrößert ist.

5. Solarkonzentrator nach einem der Ansprüche 1 bis 4, dadurch gekennzeichnet, daß die Oberseite (3) des Blocks (15) rechtwinkllig zur Haupteinstrahlungsrichtung (5) angeordnet ist.

6. Solarkonzentrator nach einem der Ansprüche 1 bis 5, dadurch gekennzeichnet, daß die Oberseite (3) des Blocks (15) rechtwinklig zur Parabelachse (16) angeordnet ist.

7. Solarkonzentrator nach einem der Ansprüche 1 bis 6, dadurch gekennzeichnet, daß zumindesf ein Querschnitt des Blocks (15) ein Parabelsegment ist.

8. Solarkonzentrator nach Anspruch 7, dadurch gekennzeichnet, daß das Parabelsegment zumindest in beiden äußeren Bereichen eine etwas geringere Krümmung als die exakte Parabelform aufweist.

9. Solarkonzentrator nach einem der Ansprüche 1 bis 8, dadurch gekennzeichnet, daß die Rückseite (2) zur Bildung der spiegelnden Schicht mit Silber bedampft ist.

10. Solarkonzentrator nach einem der Ansprüche 1 bis 9, dadurch gekennzeichnet, daß die Oberseite (3) mit einem kratzfesten, durchsichtigen, dünnen Material beschichtet ist.

11. Solarkonzentrator nach einem der Ansprüche 1 bis 10, dadurch gekennzeichnet, daß die Sonnenzelle (8) von einem Halbleiterphotoelement (9) oder einem dunklen Wärmeleitelement (11, 19) gebildet ist.

12. Solarkonzentrator nach einem der Ansprüche 1 bis 11, dadurch gekennzeichnet, daß die Ränder der flachen Oberseite (3) und damit die Seitenränder des Blocks (15) ein Rechteck, Quadrat, Fünfeck oder Sechseck bilden.

13. Solarkonzentrator nach einem der Ansprüche 1 bis 12, dadurch gekennzeichnet, daß die etwa parabolförmige Spiegelfläche von der Parabolform so weit abweicht, daß die Strahlen in einem zur Spiegelfläche näher gelegenen Abstand zum Brennpunkt im Querschnitt eine insbesondere reckteckige Flächenform aufweisen, und daß in diesem Abstand eine Absorberfläche (18) angeordnet ist.

14. Solarkonzentrator nach einem der Ansprüche 1 bis 13, dadurch gekennzeichnet, daß die flache Oberseite (3) in etwa rechteckförmig ist und an zwei Längsrändern rechtwinklig Seitenflächen (17) des Blocks (15) angrenzen, die parabelsegmentförmig sind.

15. Solarkonzentrator nach einem der Ansprüche 1 bis 14, dadurch gekennzeichnet, daß mehrere Blöcke (15) mit ihren Seitenflächen (17) aneinander liegen.

16. Solarkonzentrator nach einem der Ansprüche 13 bis 15, dadurch gekennzeichnet, daß zur Abführung der Wärme ein insbesondere rechteckförmiges Rohr (11) angeordnet ist, das an der Oberseite der Absorberfläche (8) befestigt und das auf der Oberseite (13) des Blocks (15) angeordnet oder in den Block (15) eingelassen ist.

17. Solarkonzentrator nach Anspruch 16, dadurch gekennzeichnet , daß zwischen der Absorberfläche (8) und dem Rohr ein wärmeleitendes Profil (19) angeordnet ist, das an der Absorberfläche befestigt ist und das das Rohr (11) hält.

18. Solarkonzentrator nach Anspruch 13 bis 17, dadurch gekennzeichnet, daß die Absorberfläche (8) länglich ist und insbesondere von einer durchflossenen Leitung (11) gebildet wird.

19. Solarkonzentrator nach einem der Ansprüche 1 bis 18, dadurch gekennzeichnet, daß das durchsichtige Material des Blocks (15) Glas oder Kunststoff, insbesondere Acrylglas ist.

20. Solarkonzentrator nach einem der Ansprüche 13 bis 19, dadurch gekennzeichnet, daß zwischen der Absorberfläche (8) und dem durchsichtigen Material des Blocks (15) ein zweites durchsichtiges Material angeordnet ist, dessen Brechungsindex so gewählt ist, daß die Strahlen zur Absorberfläche (8) hin gebrochen werden.

21. Solarkonzentrator nach Anspruch 20, dadurch gekennzeichnet, daß das zweite durchsichtige Material (5) ein haftendes Mittel für die Absorberfläche (8) oder die Sonnenzelle insbesondere ein Klebstoff ist.

22. Solarkonzentrator nach einem der Ansprüche 1 bis 21, dadurch gekennzeichnet, daß zur Bildung des Blocks (15) das durchsichtige Material in eine Form gegossen, gepreßt oder gespritzt ist.

23. Solarkonzentrator nach Anspruch 22, dadurch gekennzeichnet, daß die Verspiegelung der Untrerseite nach dem Entformen des Formlings vorgenommen ist.

24. Solarkonzentrator nach Anspruch 23, dadurch gekennzeichnet, daß die Rückseite nach der Verspiegelung mit einer schützenden Schicht, insbesondere einem Lack, versehen ist.

**Claims**

1. Solar concentrator having a concave mirror, which concentrates the solar radiation onto a solar cell disposed between the mirror and the sun, the concave. mirror consisting of a block (15) of transparent material, which for the formation of the mirror surface exhibits a convex curved and mirror-coated lower surface, characterized in that the block (15) is provided, on its side opposite the lower surface (2), with a plane upper surface (3), on which the solar cell is disposed or in which the solar cell is embedded.

2. Solar concentrator according to Claim 1, characterized in that the lower surface (2) is parabolic, at least in one cross section.

3. Solar concentrator according to Claim 1 or 2, characterized in that the lower surface (2) is parabolic.

4. Solar concentrator according to Claim 1 or 2, characterized in that in the central region the lower surface (2) is parabolic or approximately parabolic in crosssection and the outer regions (18) are curved so as to broaden in such a manner that the focal point is broadened or enlarged.

5. Solar concentrator according to one of Claims 1 to 4, characterized in that the upper surface (3) of the block (15) is disposed at right angles to the principal direction (5) of the incident radiation.

6. Solar concentrator according to one of Claims 1 to 5, characterized in that the upper surface (3) of the block (15) is disposed at right angles to the parabola axis (16).

7. Solar concentrator according to one of Claims 1 to 6, characterized in that at least one cross-section of the block (15) is a segment of a parabola.

8. Solar concentrator according to Claim 7 characterized in that the segment of the parabola exhibits, at least in both outer regions, a somewhat smaller curvature than the precise form of the parabola.

9. Solar concentrator according to one of Claims 1 to 8, characterized in that, for the formation of the reflecting coating, silver is vapour-deposited on the reverse side (2).

10. Solar concentrator according to one of Claims 1 to 9, characterized in that the upper surface (3) is coated with a scratch-resistant, transparent, thin material.

11. Solar concentrator according to one of Claims 1 to 10, characterized in that the solar cell (8) is formed by a semiconductor photoelectric cell (9) or a dark heat-conducting element (11, 19).

12. Solar concentrator according to one of Claims 1 to 11, characterized in that the borders of the flat upper surface (3) and thus the lateral borders of the block (15) form a rectangle, a square, a pentagon or a hexagon.

13. Solar concentrator according to one of Claims 1 to 12, characterized in that the approximately parabolic mirror surface deviates from the form of a parabola to such an extent that at a spacing - set closer to the mirror surface - from the focal point the rays exhibit in crosssection an in particular rectangular surface shape, and in that an absorber surface (8) is disposed at this spacing.

14. Solar concentrator according to one of Claims 1 to 13, characterized in that the flat upper surface (3) is approximately rectangular and at two longitudinal borders there adjoin at right angles lateral surfaces (17) of the block (15), which have the shape of a segment of a parabola.

15. Solar concentrator according to one of Claims 1 to 14, characterized in that a plurality of blocks (15) lie against one another by their lateral surfaces (17).

16. Solar concentrator according to one of Claims 13 to 15, characterized in that, in order to conduct away the heat, an in particular rectangular tube (11) is disposed, which is secured to the upper surface of the absorber surface (8) and which is disposed on the upper surface (3) of the block (15) or is embedded in the block (15).

17. Solar concentrator according to Claim 16, characterized in that between the absorber surface (8) and the tube a heat-conducting profile (19) is disposed, which is secured to the absorber surface and which holds the tube (11).

18. Solar concentrator according to Claim 13 to 17, characterized in that the absorber surface (8) is elongate and is formed, in particular, by a duct (11) through which flow takes place.

19. Solar concentrator according to one of Claims 1 to 18, characterized in that the transparent material of the block (15) is glass or plastic material, in particular acrylic glass.

20. Solar concentrator according to one of Claims 13 to 19, characterized in that between the absorber surface (8) and the transparent material of the block (15) a second transparent material is disposed, the refractive index of which is selected in such a manner that the rays are refracted towards the absorber surface (8).

21. Solar concentrator according to Claim 20, characterized in that the second transparent material (5) is an adhering means for the absorber surface (8) or the solar cell, and is in particular an adhesive.

22. Solar concentrator according to one of Claims 1 to 21, characterized in that, to form the block (15), the transparent material is cast, pressed or injected into a mould.

23. Solar concentrator according to Claim 22, characterized in that the mirror-coating of the lower surface is undertaken after the release of the moulded article from the mould.

24. Solar concentrator according to Claim 23, characterized in that after mirror-coating the reverse side is provided with a protective coating, in particular a lacquer.


**Revendications**

1.- Concentrateur solaire avec un miroir creux, qui concentre le rayonnement solaire sur une cellule solaire située entre le miroir et le soleil, le miroir étant constitué d'un bloc (15) de matériau transparent qui présente une face inférieure courbe convexe et métallisée pour former la surface réfléchissante, caractérisé par le fait que le bloc (15) est muni, sur sa face opposée à la face inférieure (2), d'une face supérieure plane (3) sur laquelle est disposée la cellule solaire ou dans laquelle la cellule solaire est encastrée.

2.- Concentrateur solaire selon la revendication 1, caractérisé par le fait que la face inférieure (2) est parabolique dans au moins une section.

3.- Concentrateur solaire selon la revendication 1 ou 2, caractérisé par le fait que la face inférieure (2) est parabolique.

4.- Concentrateur solaire selon la revendication 1 ou 2, caractérisé par le fait que la face inférieure (2) est en section parabolique ou sensiblement parabolique dans la zone médiane et les zones extérieures (18) sont cintrées évasées de telle manière que le foyer est évasé ou agrandi.

5.- Concentrateur solaire selon l'une des revendications 1 à 4, caractérisé par le fait que la face supérieure (3) du bloc (15) est disposée orthogonalement à la direction principale (5) de radiation incidente.

6.- Concentrateur solaire selon l'une des revendications 1 à 5, caractérisé par le fait que la face supérieure (3) du bloc (15) est disposée orthogonalement à l'axe (16) de la parabole.

7.- Concentrateur solaire selon l'une des revendications 1 à 6, caractérisé par le fait qu'au moins une section transversale du bloc (15) est un segment de parabole.

8.- Concentrateur solaire selon la revendication 7, caractérisé par le fait que le segment de parabole présente au moins dans les deux zones extérieures une courbure quelque peu inférieure à la forme exacte de parabole.

9.- Concentrateur solaire selon l'une des revendications 1 à 8, caractérisé par le fait que la face arrière (2) est métallisée sous vide à l'argent pour former la couche réfléchissante.

10.- Concentrateur solaire selon l'une des revendications 1 à 9, caractérisé par le fait que la face supérieure (3) est recouverte par un matériau mince, transparent et résistant à l'abrasion.

11.- Concentrateur solaire selon l'une des revendications 1 à 10, caractérisé par le fait que la cellule solaire (8) est formée par un photo-élément semi-conducteur (9) ou un élément thermoconducteur noir (11, 19)

12.- Concentrateur solaire selon l'une des revendications 1 à 11, caractérisé par le fait que les bords de la face supérieure plane (3) et avec eux les bords latéraux du bloc (15) forment un rectangle, un carré, un pentagone ou un hexagone.

13.- Concentrateur solaire selon l'une des revendications 1 à 12, caractérisé par le fait que la surface réfléchissante sensiblement parabolique s'écarte de la forme parabolique suffisamment pour que les rayons présentent une forme superficielle en particulier rectangulaire en section transversale à une distance plus proche de la surface réfléchissante par rapport au foyer, et qu'une surface absorbante (8) est disposée dans cette distance.

14.- Concentrateur solaire selon l'une des revendications 1 à 13, caractérisé par le fait que la face supérieure plane (3) est sensiblement rectangulaire et que des faces latérales (17) du bloc (15), qui sont en forme de segments de paraboles, sont adjacentes orthogonalement à deux bords longitudinaux.

15.- Concentrateur solaire selon l'une des revendications 1 à 14, caractérisé par le fait que plusieurs blocs (15) sont côte-à-côte par leurs faces latérales (17).

16.- Concentrateur solaire selon l'une des revendications 13 à 15, caractérisé par le fait qu'un tube (11), en particulier de forme rectangulaire, est disposé pour l'évacuation de la chaleur, est fixé sur la face supérieure de la surface absorbante (8) et est disposé sur la face supérieure (3) du bloc (15) ou est encastré dans le bloc (15).

17.- Concentrateur solaire selon la revendication 16, caractérisé par le fait qu'entre la surface absorbante (8) et le tube est disposé un profilé (19) thermoconducteur qui est fixé sur la surface absorbante et maintient le tube (11).

18.- Concentrateur solaire selon l'une des revendications 13 à 17, caractérisé par le fait que la surface absorbante (8) est oblongue et est formée en particulier par un conduit (11) traversant.

19.- Concentrateur solaire selon l'une des revendications 1 à 18, caractérisé par le fait que le matériau transparent du bloc (15) est du verre ou une matière synthétique, en particulier du verre acrylique.

20.- Concentrateur solaire selon l'une des revendications 13 à 19, caractérisé par le fait qu'un second matériau transparent est disposé entre la surface absorbante (8) et le matériau transparent du bloc (15), dont l'indice de réfraction est choisi de telle manière que les rayons sont réfractés en direction de la surface absorbante (8).

21.- Concentrateur solaire selon la revendication 20, caractérisé par le fait que le second matériau transparent (5) est un matériau adhérent pour la surface absorbante (8) ou la cellule solaire, en particulier une colle.

22.- Concentrateur solaire selon l'une des revendications 1 à 21, caractérisé par le fait que, pour former le bloc (15), le matériau transparent est coulé, comprimé ou injecté dans un moule.

23.- Concentrateur solaire selon la revendication 22, caractérisé par le fait que la métallisation de la face inférieure est effectuée après le démoulage de l'aggloméré.

24.- Concentrateur solaire selon la revendication 23, caractérisé par le fait que la face arrière est munie, après la métallisation, d'une couche protectrice, en particulier de laque.

Fig.1

Fig.2